# EUROPÄISCHE PATENTANMELDUNG

(11) **EP 4 141 713 A1**
(43) Veröffentlichungstag der Anmeldung: **01.03.2023**
(21) Anmeldenummer: 21192862.7
(22) Anmeldetag: 24.08.2021
(51) Int. Cl.: G06F 21/44, G05B 17/02

(54) **VERFAHREN ZUM ZUORDNEN EINES DIGITALEN MODELLS ZU EINER PHYSIKALISCHEN KOMPONENTE EINES AUTOMATISIERUNGSSYSTEMS, AUTOMATISIERUNGSSYSTEM UND FERTIGUNGSANLAGE**

(71) Anmelder: Siemens Aktiengesellschaft, 80333 München (DE)
(72) Erfinder: Falk, Rainer, 85586 Poing (DE); Fischer, Kai, 85598 Baldham (DE); Fries, Steffen, 85598 Baldham (DE); Heintel, Markus, 81377 München (DE); Klasen, Wolfgang, 85521 Ottobrunn (DE); Maftun, Aliza, 81549 München (DE)

(57) **Zusammenfassung**

Bei dem Verfahren zum Zuordnen eines digitalen Modells zu einer physikalischen Komponente eines Automatisierungssystems wird eine physikalische Komponente mit einer Verweisinformation, die auf zumindest ein digitales Modell verweist, herangezogen und es wird mittels der Verweisinformation das digitale Modell, auf welches die Verweisinformation verweist, ermittelt und der physikalischen Komponente zugeordnet.

Bei dem Automatisierungssystem, das zumindest eine physikalische Komponente sowie eine Schnittstelle zu zumindest einem digitalen Modell der physikalischen Komponente umfasst, umfasst die physikalische Komponente zumindest eine Verweisinformation, die auf das mindestens eine digitale Modell der physikalischen Komponente verweist.

Die Fertigungsanlage umfasst ein solches Automatisierungssystem.

## Beschreibung

Die Erfindung betrifft ein Verfahren zum Zuordnen eines digitalen Modells zu einer physikalischen Komponente eines Automatisierungssystems, ein Automatisierungssystem sowie eine Fertigungsanlage.

Es sind digitale Modelle bekannt, welche ein virtuelles, digitales Abbild eines realen Objekts, insbesondere eines Gerätes, einer Maschine oder einer Anlage, bilden. Solche digitalen Modelle werden auch als digitaler Zwilling (engl.: "Digital Twin") bezeichnet. Ein digitaler Zwilling kann auch im Rahmen einer Verwaltungsschale (engl.: "Asset Administration Shell") realisiert sein. Der digitale Zwilling ist auf einer Datenverarbeitungsanlage realisiert und kann unter einer Adresse, insbesondere einer IP-Adresse und/oder einem DNS-Namen und/oder einer URL, über ein Kommunikationsnetzwerk erreicht werden.

Digitale Zwillinge verarbeiten sensible Daten des jeweils zugeordneten realen Objekts, deren Integrität und Vertraulichkeit sichergestellt werden müssen. Es ist daher zu verhindern, dass falsche Daten oder Daten eines falschen digitalen Zwillings verwendet werden. Zudem ist es zu verhindern, dass sensible Daten einem falschen digitalen Zwilling bereitgestellt werden. Der Zugriff auf Daten eines digitalen Zwillings erfordert regelmäßig eine Zugangsauthentisierung, bei der sensible Zugangsdaten, insbesondere ein Passwort oder ein Zugangstoken, etwa ein JSON-Web-Token oder ein SAML-Token, verwendet oder übermittelt werden.

Es ist daher zu gewährleisten, dass beim Zugriff auf einen digitalen Zwilling, der einem realen, physikalischen, Objekt oder einer Gruppe von zusammengehörenden realen Objekten zugeordnet ist, tatsächlich auf einen solchen digitalen Zwilling zugegriffen wird, der dem bestimmten realen Objekt *vertrauenswürdig* zugeordnet ist.

Grundsätzlich könnte man digitale Zwillinge realen, physikalischen, Objekten manuell fest zuordnen. Allerdings skaliert eine solche manuelle, feste, Zuordnung nicht für eine größere Anzahl von realen Objekten und ist fehleranfällig.

Es ist daher Aufgabe der Erfindung, ein verbessertes Verfahren zum Zuordnen eines digitalen Modells zu einer physikalischen Komponente eines Automatisierungssystems anzugeben, welches insbesondere leicht mit der Zunahme an physikalischen Komponenten des Automatisierungssystems skaliert und welches insbesondere leicht automatisierbar ist. Zudem ist es Aufgabe der Erfindung, ein verbessertes Automatisierungssystem anzugeben, mit welchem das erfindungsgemäße Verfahren durchgeführt werden kann. Zudem soll eine verbesserte Fertigungsanlage angegeben werden.

Diese Aufgabe der Erfindung wird mit einem Verfahren zum Zuordnen eines digitalen Modells zu einer physikalischen Komponente eines Automatisierungssystems mit den in Anspruch 1 angegebenen Merkmalen sowie mit einem Automatisierungssystem mit den in Anspruch 9 angegebenen Merkmalen sowie mit einer Fertigungsanlage mit den in Anspruch 13 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Zuordnen eines digitalen Modells zu einer physikalischen Komponente eines Automatisierungssystems wird eine physikalische Komponente mit einer Verweisinformation, die auf zumindest ein digitales Modell verweist, herangezogen, und mittels der Verweisinformation wird das digitale Modell, auf welches die Verweisinformation verweist, ermittelt und der physikalischen Komponente zugeordnet. Besonders bevorzugt ist die Verweisinformation eine physisch in oder an der physikalischen Komponente integriert und, insbesondere ausschließlich, in, insbesondere direktem, Kontakt mit der physikalischen Komponente und/oder mit einem räumlichen Maximalabstand zur physikalischen Komponente zugänglich.

Bei dem erfindungsgemäßen Verfahren kann also vorteilhaft die Verweisinformation der physikalischen Komponente herangezogen werden. Folglich ist ein Zugriff auf die physikalische Komponente erforderlich, um die Verweisinformation, welche auf das digitale Modell verweist, zu ändern. Auf diese Weise ist infolge einer physikalischen Komponente mit einer Verweisinformation die Zuordnung eines digitalen Modells zur physikalischen Komponente besonders sicher, da eine Änderung der Verweisinformation der physikalischen Komponente nur schwierig unbeabsichtigt oder mit Angriffsintention aus der Ferne änderbar ist. Folglich bildet die erfindungsgemäß vorgesehene Verweisinformation gewissermaßen eine physische Beglaubigung eines Verweises auf das digitale Modell. Über die Verweisinformation der physikalischen Komponente ist daher das digitale Modell in der physikalischen Welt an der physikalischen Komponente verankert. Besonders bevorzugt ist bei dem erfindungsgemäßen Verfahren die Verweisinformation eine optisch oder induktiv oder per Funk auslesbare physikalische Verweisinformation. Insbesondere ist die Verweisinformation hardwarebasiert, das heißt insbesondere nicht als computerimplementierte, veränderliche, Software, realisiert.

Bevorzug umfasst bei dem dem erfindungsgemäßen Verfahren die Verweisinformation einen optisch lesbaren Code, insbesondere einen Barcode oder einen QR-Code. Auf diese Weise kann die Verweisinformation einfach optisch auslesbar sein, insbesondere mittels eines Barcodelesers oder eines QR-Codelesers, zweckmäßigerweise mittels einer Barcodeleser-App oder einer QR-Codeleser-App auf einem Smartphone oder einem Tablet und/oder einem Mobilcomputer.

Zusätzlich oder alternativ weist bei dem erfindungsgemäßen Verfahren die Verweisinformation einen kontaktlos auslesbaren Datenträger, insbesondere mindestens einen aktiven oder passiven Funkchip, vorzugsweise ein NFC-Label und/oder ein NFC-Token, auf. Mittels eines kontaktlos auslesbaren Datenträgers muss, ähnlich wie bei einem optisch lesbaren Code, eine Zuordnung von digitalem Modell zur physikalischen Komponente in einer räumlichen Nähe, d.h. mit einem Maximalabstand zur physikalischen Komponente erfolgen. Eine unzulässige Änderung (Manipulation) der Verweisinformation aus der Ferne, d. h. mit einem größeren Abstand als dem Maximalabstand, von der physikalischen Komponente, etwa über das Internet oder durch einen räumlich entfernten Angreifer, ist in dieser Weiterbildung der Erfindung nicht möglich. Mittels eines kontaktlos auslesbaren Datenträgers, insbesondere mittels eines aktiven oder passiven Funkchips, kann aber in räumlicher Nähe zur physikalischen Komponente eine Zuordnung des digitalen Modells zur physikalischen Komponente mittels eines digitalen Lesers des kontaktlos auslesbaren Datenträgers automatisiert erfolgen. Ein manueller Aufwand zur Zuordnung vom digitalen Modell zur physikalischen Komponente kann in dieser Weiterbildung der Erfindung folglich äußerst gering gehalten werden.

Zweckmäßig weist bei dem erfindungsgemäßen Verfahren die Verweisinformation eine Adresse, insbesondere eine URL, und/oder einen Verweis, etwa eine Referenzinformation, insbesondere ein Name, in einem Verzeichnis von digitalen Modellen, auf. Mittels des Namens oder mittels des Verweises lässt sich folglich das digitale Modell einfach auffinden. Mittels der URL oder mittels des Verweises, etwa mittels der Referenzinformation, kann das digitale Modell vorzugsweise eindeutig lokalisiert werden und der physikalischen Komponente zugeordnet werden.

Besonders bevorzugt weist bei dem erfindungsgemäßen Verfahren die Verweisinformation Informationen über eine Kategorie von Daten des digitalen Modells und/oder eine weitere Eigenschaft von Daten des digitalen Modells, insbesondere eine Aktualität und/oder einen Übertragungsschutz und/oder eine Genauigkeit der Daten, auf. So kann die Verweisinformation Informationen darüber enthalten, wie aktuell die Daten des digitalen Modells sind, mit welcher Sicherheit die Daten des digitalen Modells geschützt oder zu schützen sind. Ferner kann auch eine Genauigkeit der Daten enthalten sein, insbesondere eine Genauigkeit von Ortsdaten oder aber eine Genauigkeit der Zuordnung der Daten zu Personen, Betreibern oder Geräten, etwa ob die Daten zu individuellen Personen oder zu Personengruppen oder zu einem individuellen Betreiber oder zu Betreibergruppen oder zu einem individuellen Gerät oder zu Gerätegruppen oder zu Pseudonymen zugeordnet oder gar nicht zugeordnet, d. h. anonym, sind.

In einer bevorzugten Weiterbildung des erfindungsgemäßen Verfahrens prüft die physikalische Komponente Eigenschaften des digitalen Modells und/oder von durch das digitale Modell verarbeiteten und bereitgestellten Daten auf Übereinstimmung mit vorgegebenen Eigenschaften. Auf diese Weise kann die physikalische Komponente feststellen, ob Eigenschaften des digitalen Modells noch immer mit den tatsächlichen Eigenschaften der physikalischen Komponente übereinstimmen. Im Falle einer Abweichung kann die physikalische Komponente die Zuordnung des digitalen Modells zu dieser physikalischen Komponente lösen. Beispielsweise kann die Verweisinformation aktualisiert werden, sodass feststellbar ist, dass eine Zuordnung des digitalen Modells zur physikalischen Komponente nicht weiter vorgesehen ist. Im Falle des Lösens einer Zuordnung eines digitalen Modells von einer physikalischen Komponente, kann die physikalische Komponente die Verweisinformation widerrufen.

In einer vorteilhaften Weiterbildung der Erfindung ist bei dem Verfahren die Verweisinformation zeitlich begrenzt gültig. Auf diese Weise muss die Zuordnung des digitalen Modells zur physikalischen Komponente nach einem Ende einer Gültigkeit der Verweisinformation neu unternommen werden. In dieser Weiterbildung der Erfindung muss folglich eine Zuordnung von digitalem Modell zur physikalischen Komponente nicht widerrufen werden, wenn sich bei dem digitalen Modell sicherheitskritische Änderungen, etwa Angriffe von dritter Seite auf das digitale Modell, ergeben, sondern es ist in dieser Weiterbildung der Erfindung stets erforderlich, einer aktuellen Verweisinformation der physikalischen Komponente auf ein digitales Modell zu folgen, um eine Zuordnung erneut vorzunehmen.

Bevorzugt verweist bei dem erfindungsgemäßen Verfahren die Verweisinformation auf zwei oder mehr digitale Modelle der physikalischen Komponente. Es können somit digitale Modelle zur physikalischen Komponente redundant vorhanden sein, was etwa eine besonders hohe Sicherheit gegenüber unbeabsichtigten Änderungen des digitalen Modells bewirkt. Auch können Angriffe auf das digitale Modell in dieser Weiterbildung der Erfindung leicht erkannt werden, da unerkannte Angriffe synchron auf die zwei oder mehr digitalen Modell erfolgreich erfolgen müssten. Weiterhin kann die Verfügbarkeit verbessert sein, wenn mehrere digitale Modelle vorhanden sind.

Das erfindungsgemäße Automatisierungssystem ist zur Ausführung eines erfindungsgemäßen Verfahrens wie vorhergehend beschrieben eingerichtet. Das Automatisierungssystem gemäß der Erfindung umfasst zumindest eine physikalische Komponente, wobei die physikalische Komponente zumindest eine Verweisinformation umfasst, die auf mindestens ein digitales Modell der physikalischen Komponente verweist. Das erfindungsgemäße Automatisierungssystem ist folglich zur Ausführung eines erfindungsgemäßen Verfahrens geeignet. Besonders bevorzugt ist das erfindungsgemäße Automatisierungssystem eingerichtet zur Ausführung eines erfindungsgemäßen Verfahrens wie zuvor beschrieben. Besonders bevorzugt umfasst die physikalische Komponente eine Schnittstelle zu dem digitalen Modell der physikalischen Komponente.

Bei dem erfindungsgemäßen Automatisierungssystem sind vorteilhaft zumindest zwei physikalische Komponenten vorhanden, welche jeweils eine Verweisinformation aufweisen, wobei die beiden Verweisinformationen auf dasselbe digitale Modell verweisen. In dieser optionalen, vorteilhaften, Weiterbildung der Erfindung kann ein und dasselbe digitale Modell zwei physikalischen Komponenten zugeordnet sein. Beispielsweise können die beiden physikalischen Komponenten aus Sicherheitsgründen oder aus Verfügbarkeitsgründen oder aus Gründen der funktionalen Sicherheit (Safety) redundant vorgesehen sein.

Bevorzugt ist das erfindungsgemäße Automatisierungssystem ein Netzwerk, insbesondere ein Internet-der-Dinge-Netzwerk oder das Automatisierungssystem umfasst ein solches Netzwerk, insbesondere ein Internet-der-Dinge-Netzwerk. Alternativ oder zusätzlich und ebenfalls bevorzugt ist das erfindungsgemäße Automatisierungssystem ein Teil einer Fertigungsanlage.

Die erfindungsgemäße Fertigungsanlage umfasst ein solches erfindungsgemäßes Automatisierungssystem.

Bei der Erfindung, d. h. bei dem erfindungsgemäßen Verfahren oder bei dem erfindungsgemäßen Automatisierungssystem kann die physikalische Komponente ausgebildet und eingerichtet sein, Eigenschaften des digitalen Modells und/oder von durch das digitale Modell verarbeiteten und bereitgestellten Daten auf Übereinstimmung mit vorgegebenen Eigenschaften oder Daten der physikalischen Komponente zu überprüfen. Auf diese Weise kann die physikalische Komponente feststellen, ob Eigenschaften des digitalen Modells noch immer mit den tatsächlichen Eigenschaften der physikalischen Komponente übereinstimmen. Im Falle einer Abweichung kann die physikalische Komponente die Zuordnung des digitalen Modells zu dieser physikalischen Komponente lösen. Insbesondere kann die Verweisinformation aktualisiert werden, sodass feststellbar ist, dass eine Zuordnung des digitalen Modells zur physikalischen Komponente nicht weiter vorgesehen ist.

Weiterhin ist es bei dem erfindungsgemäßen Verfahren und bei dem erfindungsgemäßen Automatisierungssystem möglich, dass die Verweisinformation eine Information enthält, die angibt, ob die physikalische Komponente eine solche Prüfung vornimmt, und falls ja, wann diese zuletzt erfolgt ist und/oder welche Eigenschaften auf Übereinstimmung überprüft wurden. Weiterhin kann die Verweisinformation Informationen von digitalen Modellen enthalten, zu denen die Zuordnung gelöst wurde. Dies kann dann sinnvoll sein, wenn ein Nutzer die Verbindung einer physikalischen Komponente mit einem digitalen Modell gespeichert hat, um zu vermeiden, dass auf ein nicht gültiges digitales Modell zugegriffen wird.

Nachfolgend wird die Erfindung anhand eines in der Zeichnung dargestellten Ausführungsbeispiels näher erläutert. Es zeigen:
- Fig. 1: einen Ablauf eines Ausführungsbeispiels des erfindungsgemäßen Verfahrens zur Ermittlung eines vertrauenswürdigen digitalen Zwillings schematisch in einem Blockdiagramm,
- Fig. 2: ein erfindungsgemäßes Automatisierungssystem mit einer physikalischen Komponente und mit einem digitalen Zwilling bei der Durchführung des erfindungsgemäßen Verfahrens zur Ermittlung eines vertrauenswürdigen digitalen Zwillings gemäß Fig. 1 schematisch in einer Prinzipskizze,
- Fig. 3: ein weiteres Ausführungsbeispiel eines erfindungsgemäßen Automatisierungssystems mit einer physikalischen Komponente und mit einem digitalen Zwilling bei der Durchführung des erfindungsgemäßen Verfahrens zur Ermittlung eines vertrauenswürdigen digitalen Zwillings gemäß Fig. 1 schematisch in einer Prinzipskizze sowie
- Fig. 4: einen Anwendungsfall für die Ausführungsbeispiele gemäß Fig. 2 und 3 schematisch in einer Prinzipskizze.

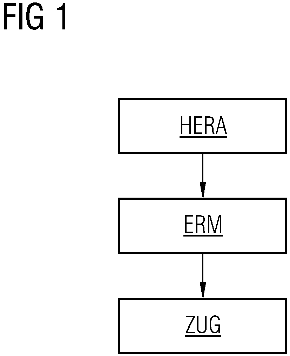

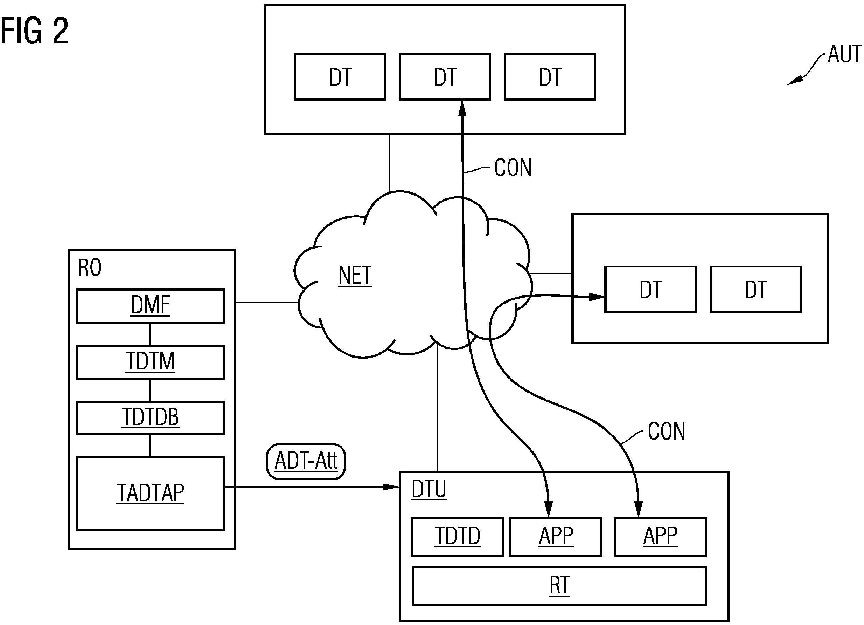

Bei dem in Fig. 1 dargestellten erfindungsgemäßen Verfahren wird ein digitales Modell zu einer physikalischen Komponente eines Automatisierungssystems AUT ermittelt. Dabei wird zunächst in einem ersten Schritt HERA eine physikalische Komponente in Gestalt eines realen Industriegeräts RO (s. Fig. 2) herangezogen, die auf zumindest ein digitales Modell in Gestalt eines digitalen Zwillings DT (Fig. 2) verweist. Die physikalische Komponente verweist mittels einer Verweisinformation auf das digitale Modell. Mittels der Verweisinformation wird in einem Ermittlungsschritt ERM das digitale Modell ermittelt und der physikalischen Komponente in einem Zuordnungsschritt ZUG zugeordnet. Das erfindungsgemäße Verfahren und das erfindungsgemäße Automatisierungssystem AUT wird nachfolgend auch anhand der Fig. 2 bis 4 detaillierter erläutert:
Das in Fig. 2 dargestellte erfindungsgemäße Automatisierungssystem AUT umfasst ein Netzwerk NET und ein an das Netzwerk NET angebundenes reales Industriegerät RO, zu welchem ein vertrauenswürdiger digitaler Zwilling mittels des erfindungsgemäßen Verfahrens ermittelt wird.

Das Automatisierungssystem AUT ist im dargestellten Ausführungsbeispiel ein Fertigungssystem und das reale Industriegerät RO ist eine physikalische Komponente, beispielsweise in Gestalt eines Fertigungswerkzeugs. Grundsätzlich kann das Automatisierungssystem AUT in weiteren, nicht eigens dargestellten Ausführungsbeispielen auch ein sonstiges Automatisierungssystem sein, beispielsweise ein Prozessleitsystem einer verfahrenstechnischen Anlage, beispielsweise einer Biotechnikanlage, wobei das reale Industriegerät RO ein Prozessmonitor der Biotechnikanlage oder ein Ventil oder ein Transportbehälter sein kann.

Der digitale Zwilling bildet im dargestellten Ausführungsbeispiel ein digitales Modell des Industriegeräts RO, welches Daten der Industrieumgebung, dem das Industriegerät RO ausgesetzt ist, entgegennimmt, im dargestellten Ausführungsbeispiel Steuerbefehle des Industriegeräts und Umgebungsparameter, etwa eine Umgebungstemperatur, des Industriegeräts RO. Zudem gibt das digitale Modell des Industriegeräts RO eine digitale Repräsentation des vom Industriegerät RO gefertigten Werkstücks aus. Der digitale Zwilling verarbeitet also Steuerbefehle und Umgebungsparameter zu einem digitalen Modell des mit dem realen Industriegerät RO gefertigten Werkstücks.

Zudem sind weitere digitale Zwillinge des Industriegeräts RO vorhanden, welche zwar identische Eingangsdaten erhalten wie vorhergehend beschrieben, aber verschiedene Ausgabedaten bereitstellen, beispielsweise Ausgabedaten in Form eines prognostizierten kostenoptimierten Wartungszeitpunkts des realen Industriegeräts RO.

Ferner sind weitere digitale Zwillinge des realen Industriegeräts RO vorhanden, welche eine effiziente Konfiguration und/oder ein produktionsgeschwindigkeitsoptimiertes Geräte-Management und/oder eine Diagnose des realen Industriegeräts RO als Ausgabedaten bereitstellen.

Im dargestellten Ausführungsbeispiel stellt das reale Industriegerät RO eine vertrauenswürdige Identifizierungsinformation TADTAP eines oder mehrerer digitaler Zwillinge DT bereit. Diese vertrauenswürdige Identifizierungsinformation TADTAP wird in einem Schritt HERA des erfindungsgemäßen Verfahrens zur Zuordnung des digitalen Zwillings DT herangezogen. Die Identifizierungsinformation TADTAP erhält ihre Vertrauenswürdigkeit aus der Herkunft der Identifizierungsinformation von dem realen Industriegerät RO selbst: Die Identifizierungsinformation wird dabei durch eine Hardware des Industriegeräts RO bereitgestellt. Mittels der Hardware erfolgt daher eine hardwarebasierte Beglaubigung ADT-Att der Identifizierungsinformation TADTAP des jeweiligen digitalen Zwillings DT. Die Beglaubigung ADT-Att der Identifizierungsinformation TADTAP des jeweiligen digitalen Zwillings DT wird nachfolgend auch einfach kurz als Beglaubigung ADT-Att bezeichnet. Die Beglaubigung ADT-Att enthält dazu die Identifizierungsinformation TADTAP des jeweiligen dem realen Industriegerät RO zugeordneten digitalen Zwillings DT. Die Identifizierungsinformation TADTAP des jeweiligen digitalen Zwillings DT kann beispielsweise eine URL und/oder eine Prüfsumme, etwa einen Hashwert, und/oder einen digitalen Fingerabdruck eines öffentlichen Schlüssels oder eines digitalen Zertifikats des digitalen Zwillings DT umfassen.

Die Beglaubigung ADT-Att umfasst zusätzlich zumindest eine Identifizierungsinformation des realen Industriegeräts RO, welches die Beglaubigung bereitstellt. Die Identifizierungsinformation des realen Industriegeräts RO kann ebenfalls mittels einer Prüfsumme, etwa einen Hashwert, und/oder einen digitaler Fingerabdruck eines öffentlichen Schlüssels oder eines digitalen Zertifikats oder eines verifizierbaren Credentials (engl.: "Verifiable Credential") des realen Industriegeräts RO gebildet sein.

In dargestellten Ausführungsbeispiel enthält die Identifizierungsinformation TADTAP des jeweiligen digitalen Zwillings DT eine Adresse zur Etablierung einer Verbindung zu dem zugeordneten digitalen Zwilling, etwa eine URL wie zuvor beschrieben. Alternativ kann die Identifizierungsinformation TADTAP einen Verweis bereitstellen, anhand dessen sich der jeweilige digitale Zwilling DT auffinden lässt, beispielsweise eine Referenzinformation über einen symbolischen Namen in einem Verzeichnis von digitalen Zwillingen.

Die Beglaubigung ADT-Att kann mit einem Sicherheitselement (engl.: "Secure Element") einer vertrauenswürdigen Ausführungsumgebung (engl.: "Trusted Execution Environment") oder einem Crypto-Chip oder integrierten Crypto-Schaltkreis des Objekts gebildet werden. Insbesondere kann die in dem Sicherheitselement enthaltene und mit der Beglaubigung ADT-Att bestätigte Information sicher gespeichert und manipulationsgeschützt verwaltet werden. So kann die Vertrauenswürdigkeit und Integrität der Beglaubigung ADT-Att sichergestellt werden.

Die Beglaubigung ADT-Att enthält im dargestellten Ausführungsbeispiel Identifizierungsinformationen von einem oder zu mehreren von dem Industriegerät RO zugeordneten digitalen Zwillingen. Dabei ist in der Beglaubigung ADT-Att in weiteren, nicht eigens dargestellten Ausführungsbeispielen zusätzlich eine Angabe eines jeweiligen Nutzungszwecks für die Nutzung des jeweiligen digitalen Zwillings enthalten, beispielsweise ein Nutzungszweck in Form einer Simulation und/oder einer Konfiguration und/oder eines Geräte-Managements und/oder einer Diagnose des realen Industriegeräts RO und/oder einer vorausschauenden Wartung des realen Industriegeräts RO. Diese Angabe des Nutzungszwecks bestätigt, dass der jeweilige digitale Zwilling für die Realisierung des angegebenen Nutzungszwecks als vertrauenswürdig vorgesehen ist. Die Angabe kann in einer Variante unterschiedliche Datenelemente, beispielsweise Datenpfade, des digitalen Zwillings unterscheiden.

Das reale Industriegerät RO kann abhängig von einer Lizenz-Information unterschiedlich umfangreiche Daten des realen Industriegeräts RO einem jeweiligen dem realen Industriegerät RO zugeordneten digitalen Zwilling DT bereitstellen oder es werden die Daten des realen Industriegeräts RO dem jeweils zugeordneten digitalen Zwilling DT unterschiedlich häufig oder unterschiedlich geschützt bereitgestellt. Die Beglaubigung ADT-Att kann eine Information enthalten, welche der Daten des realen Industriegeräts RO im dem jeweils zugeordneten digitalen Zwilling DT vorliegen und eine Qualitätsangabe enthalten, welche etwa die Häufigkeit der Aktualisierung und/oder einen Schutz der Übertragung der bereitgestellten Daten angibt. Zudem kann die Beglaubigung ADT-Att Informationen darüber enthalten, ob die von dem realen Industriegerät RO bereitgestellten Daten gegebenenfalls nur nach einer Vorverarbeitung, insbesondere einer Anonymisierung oder einer Pseudonymisierung und/oder einer Filterung und/oder einem Verrauschen, in dem jeweiligen digitalen Zwilling DT repliziert sind.

Die Beglaubigung ADT-Att kann zudem eine zeitliche Gültigkeitsangabe zur Zuordnung des digitalen Zwillings enthalten.

Die Beglaubigung ADT-Att ist dabei an dem realen Industriegerät RO selbst angeordnet und beispielsweise über RS232 und/oder SPI und/oder I2C und/oder USB und/oder optisch über einen in einem Display des Geräts anzeigbaren Code auslesbar und kryptographisch geschützt. Beispielsweise ist ein auslesbarer Code vorhanden, welcher etwa einen alphanumerischen Code, einen Barcode oder ein QR-Code enthält. Alternativ oder zusätzlich kann die Beglaubigung mit einer mit dem realen Industriegerät RO fest verbundene Komponente, etwa einem NFC-Label und/oder einem NFC-Token, gebildet sein, die einen durch einen kryptographischen Prüfwert wie beispielsweise einer Prüfsumme kryptographisch geschützten Inhalt der Beglaubigung ADT-Att bereitstellt.

Der kryptographische Prüfwert kann eine digitale Signatur oder ein Nachrichtenauthentisierungscode sein. Sie kann insbesondere durch einen geheimen, d. h. privaten, Geräteschlüssels des realen Industriegeräts RO berechenbar sein, und durch ein dem realen Industriegerät RO zugeordnetes Gerätezertifikat überprüfbar sein. Die Beglaubigung kann auf Anfrage bereitgestellt werden oder wiederholt als Broadcast-Nachricht ausgesendet werden. Die Beglaubigung kann auch über eine Netzwerkschnittstelle, z.B. Ethernet oder WLAN oder eine 5G-Mobilfunkschnittstelle oder eine Bluetooth-Schnittstelle, übertragen werden und beispielsweise lokal begrenzt bereitgestellt werden, also nur Empfängern bereitgestellt werden, welche einen Höchstabstand zum realen Industriegerät RO nicht überschreiten. Eine solche lokal begrenzte Bereitstellung kann etwa mittels einer nicht-routbaren IP-Adresse oder mittels eines Funksignals mit begrenzter Sendeleistung realisiert sein.

Das reale Industriegerät RO kann Eigenschaften des digitalen Zwillings DT und/oder von durch den digitalen Zwilling DT verarbeiteten und bereitgestellten Daten auf Übereinstimmung mit vorgegebenen Eigenschaften oder Daten des realen Industriegeräts RO überprüfen. Auf diese Weise kann das reale Industriegerät RO feststellen, ob Eigenschaften des digitalen Zwillings DT noch immer mit den tatsächlichen Eigenschaften des realen Industriegeräts RO übereinstimmen. Im Falle einer Abweichung kann das reale Industriegerät RO die Zuordnung des digitalen Zwillings DT zu diesem realen Industriegerät RO lösen. Beispielsweise kann die Identifizierungsinformation TADTAP aktualisiert werden, sodass feststellbar ist, dass eine Zuordnung des digitalen Zwillings DT zum realen Industriegerät RO nicht weiter vorgesehen ist. Weiterhin ist es möglich, dass die Beglaubigung ADT-Att eine Information enthält, die angibt, ob das reale Industriegerät RO eine solche Prüfung vornimmt, und falls ja, wann diese zuletzt erfolgt ist und/oder welche Eigenschaften auf Übereinstimmung überprüft wurden. Weiterhin kann die Beglaubigung ADT-Att Identifizierungsinformationen TADTAP von digitalen Zwillingen DT enthalten, zu denen die Zuordnung gelöst wurde. Dies kann dann sinnvoll sein, wenn ein Nutzer DTU die Verbindung eines realen Industriegeräts RO mit einem digitalen Zwilling DT gespeichert hat, um zu vermeiden, dass auf einen nicht gültigen digitalen Zwilling zugegriffen wird.

Im dargestellten Ausführungsbeispiel stellt das reale Industriegerät RO eine Beglaubigung ADT-Att an einen Nutzer DTU bereit. Das Industriegerät TDTDB unterhält eine Datenbank TDTDB vertrauenswürdiger digitaler Zwillinge DT. Die in dieser Datenbank TDTDB enthaltenen digitalen Zwillinge DT werden mittels der Identifizierungsinformation TADTAP der Beglaubigung ADT-Att eindeutig und für den Nutzer DTU auffindbar gekennzeichnet. Die Datenbank TDTDB vertrauenswürdiger digitaler Zwillinge DT wird durch einen Verwaltungsdienst TDTM in dem realen Industriegerät RO verwaltet und gelegentlich aktualisiert, beispielsweise über eine nicht explizit gezeigte Konfigurations-Schnittstelle des realen Industriegeräts RO. Die Hauptfunktion DMF des realen Industriegeräts RO ist beispielsweise eine Steuerungs- oder Regelungsfunktionalität des ein Fertigungswerkzeug darstellenden realen Industriegeräts RO.

Der Nutzer DTU, der einen digitalen Zwilling DT des realen Industriegeräts RO nutzen möchte, wählt basierend auf der vom realen Industriegerät RO bereitgestellten Beglaubigung ADT-Att nach Überprüfung des kryptographischen Schutzes der Beglaubigung ADT-Att mittels eines Auswahlwerkzeugs TDTD einen vertrauenswürdigen digitalen Zwilling DT aus der Datenbank TDTDB in einem Ermittlungsschritt ERM des erfindungsgemäßen Verfahrens aus. Mit dem ausgewählten digitalen Zwilling DT stellt der Nutzer DTU über das Netzwerk NET eine Kommunikationsverbindung CON zu dem digitalen Zwilling DT anhand einer in der Beglaubigung ADT-Att enthaltenen URL des digitalen Zwillings DT her. Mittels der Kommunikationsverbindung ordnet der Nutzer DTU folglich den digitalen Zwilling DT in einem Zuordnungsschritt ZUG des erfindungsgemäßen Verfahrens zu. Im dargestellten Beispiel sind zwei in einer Ausführungsumgebung RT ausgeführte Apps APP beim Nutzer DTU vorgesehen, um digitale Zwillinge DT zu nutzen. Hier kann bei der Auswahl eines geeigneten digitalen Zwillings DT, abhängig von einem der jeweiligen App APP zugeordneten Nutzungszweck, z.B. vorausschauende Wartung und/oder Simulation, ein für diesen Nutzungszweck vorgesehener digitaler Zwilling DT aus der Mehrzahl von vorgesehenen digitalen Zwillingen DT des realen Industriegeräts RO automatisch ausgewählt werden, und es kann der jeweiligen App APP eine entsprechende Information bereitgestellt werden.

Im Falle der Zuordnung von mehreren realen Industriegeräten RO zu einem einzigen digitalen Zwilling DT kann der zugreifende Nutzer DTU abhängig vom Nutzungszweck unterschiedliche Berechtigungen erhalten, mit denen entweder ein Zugriff auf Daten eines der dem digitalen Zwilling DT zugeordneten spezifischen realen Industriegeräte RO möglich ist oder aber der Zugriff auf Daten aller dem digitalen Zwilling DT zugeordneter realer Industriegeräte RO. Der letzte Fall ermöglicht zum Beispiel einen Abgleich der Daten von realen Industriegeräten RO gleichen Typs und kann dazu genutzt werden, einen Plausibilitätscheck zwischen verschiedenen Instanzen der realen Industriegeräte RO durchzuführen. Dies kann z.B. für eine Überwachung eines realen Industriegeräts RO genutzt werden oder aber auch für den Abgleich von redundanten realen Industriegeräten RO, beispielsweise für ein "Hot Standby". Ebenso sind Kombination von Daten mehrerer realer Industriegeräte RO im Kontext eines Fertigungsschrittes des Automatisierungssystems AUT möglich.

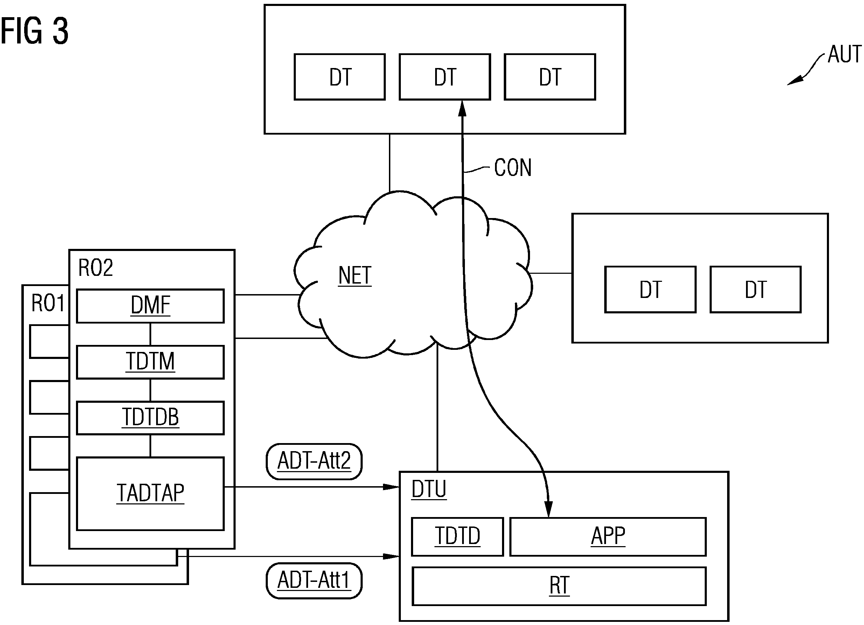

Fig. 3 zeigt zwei reale Industriegeräte RO1, R02, die nur einem digital Twin DT zugeordnet sind. Wie im anhand der Fig. 1 und 2 beschriebenen Ausführungsbeispiel stellen die realen Industriegeräte RO1, RO2 jeweils eine Beglaubigung ADT-Att1, ADT-Att2 bereit. Der Nutzer DTU greift auf den zugeordneten digitalen Zwilling DT zu. In Abhängigkeit der ausgewählten Beglaubigungen ADT-Att1 oder ADT-Att2 oder beiden können auf der Seite des Nutzers DTU unterschiedliche Berechtigungen für den Zugriff auf die Daten des digitalen Zwillings DT konfiguriert werden.

Die Beglaubigungen ADT-Att, ADT-Att1,ADT-Att2 können z.B. als ASN.1-Datenstruktur oder als XML oder als Text-Dokument oder als Binär-Datei oder als JSON-Datenstruktur oder als Attribut-Werte-Liste oder auf eine sonstige Weise kodiert sein und einen durch eine kryptographischen Prüfwert wie beispielsweise einer Prüfsumme kryptographisch geschützte Inhalte der Beglaubigung ADT-Att, ADT-Att1,ADT-Att2 enthalten. Der kryptographische Prüfwert kann beispielsweise mittels einer kryptographischen Einwegfunktion und/oder mittels einer digitalen Signatur und/oder mittels eines Nachrichtenauthentisierungscodes realisiert sein.

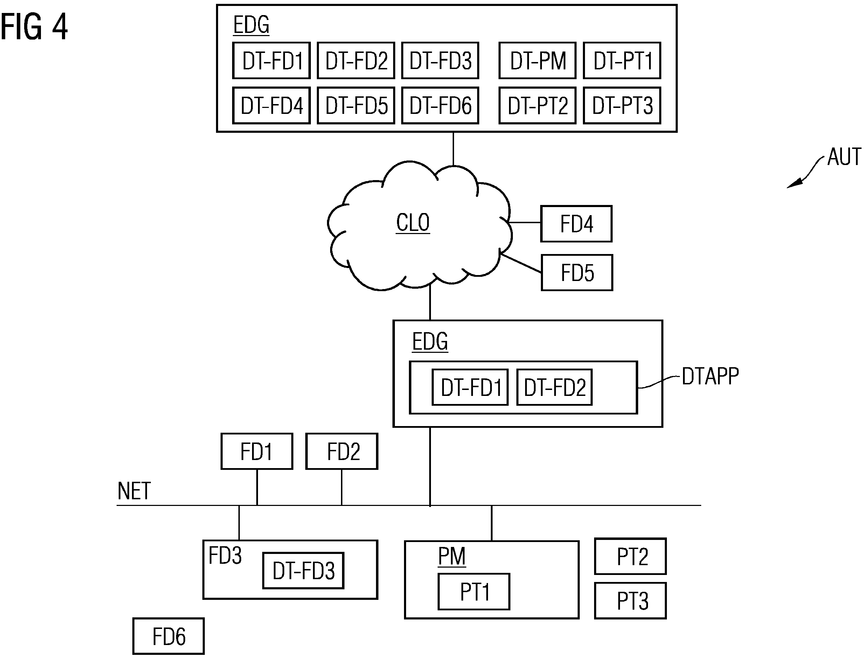

Fig. 4 zeigt als Anwendungsszenario beispielhaft ein Automatisierungssystem AUT mit mehreren realen, physikalischen, Industriegeräten in Form von Feldgeräten FD1, FD2, FD3, FD4, FD5, FD6. Die Feldgeräte FD4, FD5 sind direkt mit einem offenen Netzwerk CLO verbunden. Die Feldgeräte FD1, FD2, FD3 hingegen befinden sich in einem Netzwerk NET des Automatisierungssystems AUT, das über einen Edge-Server EDG mit dem offenen Netzwerk CLO verbunden ist. Das Feldgerät FD6 ist als Ersatzgerät vorgesehen und nicht mit dem Netzwerk NET des Automatisierungssystems AUT verbunden. Weiterhin ist eine Produktionsmaschine PM, hier eine Werkzeugmaschine, beispielhaft eine Presse oder ein Transportsystem, vorgesehen. Ferner umfasst das Automatisierungssystem AUT drei Produktionsmittel PT1, PT2, PT3, beispielsweise Werkzeuge, etwa ein Fräskopf für eine Werkzeugmaschine oder ein Druckkopf für eine additive Fertigungsmaschine in Gestalt eines 3D-Druckers. Weiterhin ist ein Cloud-Backend-Service CBE vorgesehen. Das in Fig. 4 dargestellte Automatisierungssystem AUT bildet ein erfindungsgemäßes Fertigungssystem.

Zu den realen Feldgeräten, d. h. den Feldgeräten FD1, FD2, FD3, FD4, FD5, FD6 und der Produktionsmaschine PM und den Produktionsmitteln PT1, PT2, PT3 sind jeweils ein oder mehrere digitale Zwillinge DT-FD1, DT-FD2, DT-FD3, DT-FD4, DT-FD5, DT-PM, DT-PT1, DT-PT2, DT-PT3 als virtuelle Repräsentationen des jeweiligen realen Feldgeräts FD1, FD2, FD3, FD4, FD5, FD6 und der Produktionsmaschine PM und der Produktionsmittel PT1, PT2, PT3 vorgesehen und zugeordnet. Diese sind im dargestellten Ausführungsbeispiel im Cloud-Backend CBE realisiert. Zudem sind digitale Zwillinge DT-FD1, DT-FD2 der Feldgeräte FD1, FD2 auf dem Edge-Server EDG des Automatisierungssystems AUT realisiert, z.B. als eine Digital-Twin-App DTAPP. Weiterhin enthält das Feldgerät FD3 zusätzlich einen integrierten virtuellen digitalen Zwilling DT-FD3, um Simulationen durchführen zu können.

## Patentansprüche

1. Verfahren zum Zuordnen eines digitalen Modells zu einer physikalischen Komponente eines Automatisierungssystems (AUT), bei welchem eine physikalische Komponente (RO) mit einer Verweisinformation (TADTAP), die auf zumindest ein digitales Modell (DT) verweist, herangezogen wird (HERA) und bei welchem mittels der Verweisinformation (TADTAP) das digitale Modell (DT), auf welches die Verweisinformation (TADTAP) verweist, ermittelt (ERM) und der physikalischen Komponente (RO) zugeordnet (ZUG) wird.

2. Verfahren nach dem vorhergehenden Anspruch, bei welchem die Verweisinformation (TADTAP) einen optisch lesbaren Code, insbesondere einen Barcode oder einen QR-Code, umfasst.

3. Verfahren nach dem vorhergehenden Anspruch, bei welchem die Verweisinformation (TADTAP) einen kontaktlos auslesbaren Datenträger, insbesondere einen aktiven oder passiven Funkchip, vorzugsweise ein NFC-Label und/oder einen NFC-Token, aufweist.

4. Verfahren nach einem der vorhergehenden Ansprüche, bei welchem die Verweisinformation (TADTAP) eine URL und/oder einen Verweis, etwa eine Referenzinformation, insbesondere ein Name, in einem Verzeichnis (TDTD) von digitalen Modellen, aufweist.

5. Verfahren nach einem der vorhergehenden Ansprüche, bei welchem die Verweisinformation (TADTAP) Informationen über eine Kategorie von Daten des digitalen Modells (DT) und/oder eine weitere Eigenschaft von Daten des digitalen Modells, insbesondere eine Aktualität und/oder ein Übertragungsschutz und/oder eine Genauigkeit der Daten, aufweist.

6. Verfahren nach einem der vorhergehenden Ansprüche, bei welchem die physikalische Komponente (RO) Eigenschaften des digitalen Modells (DT) und/oder von durch das digitale Modell (DT) verarbeiteten Daten auf Übereinstimmung mit vorgegebenen Eigenschaften prüft.

7. Verfahren nach einem der vorhergehenden Ansprüche, bei welchem die Verweisinformation (TADTAP) zeitlich begrenzt gültig ist.

8. Verfahren nach einem der vorhergehenden Ansprüche, bei welchem die Verweisinformation (TADTAP) auf zwei oder mehr digitale Modelle (DT) der physikalischen Komponente (RO) verweist.

9. Automatisierungssystem, umfassend zumindest eine physikalische Komponente (RO) sowie eine Schnittstelle zu zumindest einem digitalen Modell (DT) der physikalischen Komponente (RO), wobei die physikalische Komponente (RO) zumindest eine Verweisinformation (TADTAP) umfasst, die auf das mindestens eine digitale Modell (DT) der physikalischen Komponente (RO) verweist.

10. Automatisierungssystem, eingerichtet zur Ausführung eines Verfahrens nach einem der Ansprüche 1 bis 6.

11. Automatisierungssystem nach einem der vorhergehenden Ansprüche, bei welchem zumindest zwei physikalische Komponenten (RO1, RO2) vorhanden sind, welche jeweils eine Verweisinformation (ADT-Att1, ADT-Att2) aufweisen, wobei die beiden Verweisinformationen (ADT-Att1, ADT-Att2) auf dasselbe digitale Modell (DT) verweisen.

12. Automatisierungssystem nach einem der vorhergehenden Ansprüche, welches ein Netzwerk (NET), insbesondere ein Internet-der-Dinge-Netzwerk, ist oder umfasst und/oder welches ein Teil einer Fertigungsanlage ist.

13. Fertigungsanlage, umfassend ein Automatisierungssystem (AUT) nach einem der vorhergehenden Ansprüche.
